# EUROPEAN PATENT SPECIFICATION

(11) **EP 2 842 212 B1**
(45) Date of publication and mention of the grant of the patent: **14.09.2016**
(21) Application number: 13721033.2
(22) Date of filing: 26.04.2013
(51) Int. Cl.: H02J 3/00

(54) **ENERGY SAVING AND/OR SAFETY DEVICE**
ENERGIEEINSPARUNGS- UND/ODER SICHERHEITSVORRICHTUNG
DISPOSITIF DE SÉCURITÉ ET/OU ÉCONOMISEUR D'ÉNERGIE

(30) Priority: 27.04.2012 GB 201207358
(43) Date of publication of application: 04.03.2015
(73) Proprietor: Vioearth Holdings Limited, Edinburgh EH2 2AF (GB)
(72) Inventor: MCNEILL-MCCALLUM, Duncan, Edinburgh EH2 2AF (GB); MCNEILL-MCCALLUM, Emma, Edinburgh EH2 2AF (GB)
(74) Representative: Shipp, Nicholas
(86) International application number: PCT/GB2013/051084
(87) International publication number: WO 2013/160705

(56) References cited:
- WO-A2-2006/106310
- GB-A- 2 469 765
- US-A- 5 579 201
- US-A1- 2004 070 275
- US-A1- 2006 158 157
- US-A1- 2011 163 600
- US-A1- 2011 313 583

## Description

### Scope of Invention

The invention relates to a device for saving energy and/or increasing safety in relation to electrical appliances.

### Background to the Invention

With both energy costs and demand rising, many companies and consumers alike are looking for ways to reduce their energy expenditure. Furthermore, many Governments have committed to greenhouse gas reduction measures, such as those required by the Kyoto protocol. However, with many environmentally friendly energy generation technologies not yet at a commercial stage or suffering from problems such as intermittency of supply or subject to planning objections due to their visual impact on the environment, measures to reduce energy consumption and improve efficiency are increasingly being regarded as playing a vital contribution to meeting such targets.

Electrical consumption by devices and appliances such as computers, monitors, printers and the like, is one area that may be targeted for such energy saving measures, both in the home and work environment. In particular, many users are unaware that when they switch off their electrical devices at the end of the day, many of these devices continue to draw power. In one case study, a PC, three monitors, a set of desktop speakers and a table lamp consumed 12.8 watts of energy when powered down, but remaining plugged in to a conventional power strip.

In addition to the obvious cost implications of such unnecessary and unwanted energy consumption, this situation also raises the safety issue of a potential fire hazard, particularly at a time when the equipment is likely to be unattended.

It is at least one object of at least one embodiment of the present invention to improve safety and/or reduce the energy consumed through the use of electrical devices. It is at least one object of at least one embodiment of the present invention to eliminate or mitigate at least one problem in the prior art.

### Statements of Invention

According to a first aspect of the present invention is a power control device, the power control device comprising a communication system for communicating with at least one remote agent and/or remote user input device, the power control device being configured to control power supplied to or from one or more power outlets responsive to the remote agent and/or remote user input device.

The at least one remote agent may monitor, and may run on, one or more monitored devices. At least one of the remote agents may comprise a software and/or firmware agent. The remote agent may comprise or communicate via a network or cloud application. At least one of the monitored devices may comprise a computer. At least one controlled device may be connected or connectable to the one or more power outlets. At least one and preferably each of the controlled devices may be different from at least one and preferably each monitored device.

The power control device may be configurable and/or controllable using an associated application, which may comprise a remote or network based application, such as a or the cloud application. The power control device may collect or provide data associated with the power outlets and/or power control device, such as energy or power usage and time data to a or the associated application.

The power control device may comprise at least one controller for selectively controlling the power supplied to the one or more power outlets. The one or more power outlets may be comprised in the power control device. The power control device may comprise a plurality of operational groups (e.g. at least two and preferably at least three operational groups). Each operational group may comprise at least one of the one or more power outlets (e.g. each operational group may comprise a subset of the power outlets, which may be a distinct subset).

At least one and preferably each power outlet may be assignable to an operational group, for example, assignable by a user. The at least one and preferably each power outlet may be assignable locally and/or remotely, e.g. over a network or internet connection e.g. via the cloud and/or using an application such as an application running on a mobile device.

A device type may be assigned or assignable to a power outlet or operational group. A power outlet may be assignable to an operational group based on the device type that is connected to it. In this way, for example, energy consumption monitored by the power control device may be specified or analyzed by device type and/or supply of power may be controlled by device type.

A unique identifier may be assigned or assignable to each power control unit and/or operational group and/or output power outlet. The power control device may be operable to monitor and/or record power consumption data from and/or control each individual power outlet and/or operational group, for example, by using the unique identifiers. In this way, power consumption may be monitored or analyzed by individual power outlets and/or operational groups of power outlets and power supply to individual power outlets and/or operational groups of power outlets may be controlled.

Each operational group of power outlets may be controlled by the power control device differently and/or according to a different power control scheme to the other operational groups. One of the operational groups may comprise at least one controlled or peripheral power outlet for supplying power to at least one controlled device, such as peripheral, secondary or auxiliary devices, e.g. computer peripherals, that are to be shut down responsive to the remote agent. One of the operational groups may comprise at least one master outlet for supplying power to at least one monitored device (e.g. a computer). One of the operational groups may comprise at least one persistent outlet, which may be for supplying power to at least one device for which power is to be supplied for a longer duration before being shut down relative to the controlled devices (e.g. for a longer duration than peripheral or auxiliary devices).

The at least one remote agent may be configured to monitor usage of the one or more monitored devices and signal the power control device when the monitored device has not been used and/or not received user input for a threshold period, e.g. after a threshold period of user inactivity. The threshold period may be user selectable.

The at least one remote agent and/or power control device may comprise a timer for timing duration since a last user input or action. The at least one remote agent and/or power control device may be configured to compare the timer with the threshold period in order to determine whether a warning and/or power control action should be taken.

The at least one remote agent and/or the power control device may be configured to provide a warning to a user of the at least one monitored device, such as a visual and/or audible and/or tactile warning. For example, the warning may comprise a warning displayed on a display of the monitored device and/or a bell or sound and/or activating a vibration device. The warning may be indicative of an imminent power control operation by the power control device and/or remote agent, such as placing the monitored device in a standby, hibernate or shut down mode and/or disconnecting power supplied to the monitored device. The warning may be displayed a time before the threshold period.

The at least one remote agent may be configured to place the at least one monitored device into a first power controlled mode such as a standby and/or hibernate mode, for example, when the remote agent determines that the threshold period has elapsed since the last user action or input.

The at least one remote agent and/or power control device may be configured to reset the timer and/or bring the monitored device out of the first power controlled mode if a user interaction with the one or more monitored devices is detected and/or responsive to operation of a and/or the user input device, such as a remote user input device associated or pairable with, connected or connectable to or in communication with the power control device.

The power control device may be separate from the one or more monitored devices. The power control device may be an electrical power control device and/or the one or more monitored devices and/or the one or more controlled devices may be electrical devices.

The power control device may comprise and/or be communicatable with at least one power inlet or connector for providing power to the power control device. The at least one power inlet or connector may be connected or connectable to a power supply such as a mains power supply, for example, by comprising a plug. The power inlet or connector may be disconnectable from the power control device, for example, so that it may be connected to other devices such as a UPS battery pack. The power inlet may be connectable to each of the one or more power outlets via. one or more of the controllers for selectively connecting/disconnecting the one or more power outlets to the power inlet. Each power outlet may be connected to the power inlet via a corresponding controller. At least one and preferably each of the controllers may comprise a relay, switch or the like. The one or more controllers may be operable to selectively connect/disconnect power to power outlets individually and/or by operational group, wherein the operational group maybe assignable to the power outlets by the user.

The power control device may comprise or be comprised in an electrical extension socket, lead or distribution device. The at least one power outlet may comprise an electrical socket into which electrical devices may be plugged. Optionally, the power control device may comprise or be comprised in a wall power socket or floor port configuration.

The power control device may comprise a processor and/or memory. The power control device may be configured to access or be associated with a network attached storage device (NAS), to allow sharing of data over a network comprising the power control devices. The processor may be configured to communicate with the one or more remote agents and/or one or more remote servers and/or at least one other power control device via the communications system. The controller(s) may be operable responsive to the processor. The power control device may comprise an interchangeable cover part, such as a top cover, which may be a push on, snap on or interference fit cover part.

It will be appreciated by a person skilled in the art that a standby mode is a mode where power is supplied to and consumed by a device but that some functions and/or components of the device are disabled or switched off. A hibernate mode is a mode wherein at least some of the contents of RAM memory, such as program parameters and data, are transferred to a persistent memory, such as a hard disk or the like, before power is cut to the device, i.e. substantially no power is consumed in the hibernation mode.

The power control device may be configured to cut power to the at least one master outlet and thereby to one or more controlled devices if the power controller and/or remote agent determines that the threshold period has elapsed since the last user action or input to a monitored device and/or responsive to the user input device. The power control device may be configured to restore power to the one or more monitored devices and/or controlled devices if the power controller and/or remote agent determines that a user input to the monitored device has taken place and/or responsive to the user input device associated with, connected or connectable to or in communication with the power control device.

The power control device may be configured to control power supplied to the at least one power outlet(s) and thereby the device(s) supplied with power thereby according to a plurality of power control schemes.

The power control devices may be configured to place at least one associated or connected device, such as the monitored device, into at least one and preferably a plurality of power controlled modes, responsive to the remote agent and/or operation of the remote user input device, for example, after associated period(s) since a last user input or action with the monitored device.

For example, once the power control device and/or remote agent determines that the threshold period has elapsed since the last user input to or operation/action on the monitored device, the power control device and/or remote agent may be configured to place the monitored device into a first power controlled mode, such as a standby mode, and preferably may also disconnect power to one or more of the controlled or peripheral outlets and thereby to at least one controlled device.

If after a further threshold has elapsed and no further user input to, or operation/action on, the monitored device has taken place and/or the user input device has not been operated since the first power controlled (e.g. standby) mode was entered, then the power control device and/or remote agent may be configured to thereafter directly or indirectly place the monitored device into a second power controlled mode, such as a hibernation mode and optionally may also disconnect power to the persistent outlets. For example, the monitored device may be directly or immediately switched into the second power controlled mode after the further threshold has elapsed or, for example, briefly brought out of the first power controlled mode to allow necessary function to be restored to the monitored device before it is placed into the second power controlled state. The power control device and/or remote agent may be configured to disconnect power to the master outlets after a delay period from the further threshold and/or after a delay period from the power control device / remote agent signaling the monitored device to enter the second power controlled mode and/or after a delay period from disconnection of power from the persistent outlets. In this way, power may be supplied to any monitored devices for a period after the further threshold to allow the monitored devices time to complete entry into the hibernation mode, thereby preventing the loss of user data that might otherwise occur if power is disconnected from the monitored device before entry into the hibernation mode is completed.

In this way, each of the operational groups of power outlets (i.e. the peripheral, master and persistent power outlets) may be subject to a different power control scheme. Namely, when a period of user inactivity reaches the threshold period, power is disconnected from the peripheral outlets but maintained to both the master outlets and persistent power outlets. At this time, the monitored devices may also be placed in the first reduced power consumption mode (e.g. standby). When a period of user inactivity reaches the further threshold, power may be disconnected from the persistent power outlets but maintained to the master power outlets whilst the monitored device is instructed to enter a second reduced power consumption mode (e.g. hibernation). Thereafter, for example, power may be disconnected from the master power outlets after a further delay. It will be appreciated that each of the operational groups of power outlets may have power disconnected according to different parameters and/or at different times and/or after different periods of user inactivity to other of the operational groups. In this way, for example, controlled devices such as computer peripherals may be powered down by the power control device, whilst monitored devices such as the computer may continue to be supplied with power. For example, the monitored devices may instead be initially and/or subsequently put into a reduced power consumption mode such as a standby or hibernation mode, for example, to prevent loss of work and/or to achieve a quick restart.

The user input device may comprise by way of example, one or more buttons. The user input device may be comprised in, connected or connectable to or pairable or communicatable with the power control device, e.g. via the communication system. The user input device may be directly or indirectly connected or connectable or communicatable with the power control device and/or individual power outlets and/or operational groups. This may, by way of example, comprise being directly connected, connectable or in communication via a cabled or wireless connection. This may comprise being indirectly connected, connectable or in communication via one or more intermediate devices, a network, the cloud application and/or the like. The power control device may be configured to control the power supplied to at least one of the one or more controlled or peripheral power outlets and thereby the controlled device(s) responsive to the user input device, for example to regulate, cut or restore power to the controlled device(s). The power control device may be configured to selectively control power to one or more of the operational groups of power outlets and/or perform selected power control schemes or operations responsive to an associated input/signal from the user input device.

The user input device may comprise a multifunction user input device. For example the user input device may be configured to place one or more operational groups into the first power controlled mode using a first input and to place one or more operational groups into the second power controlled mode using a second input. For example, the first input may comprise a single button press or selection of an appropriate icon or other input means on a tray or other desktop device. The second input may comprise a double button press of a button or selection of a different icon or other input means.

The power control device may be configured to restore power to selected power outlets, operational groups and/or devices according to a first user input and may be configured to restore power to further power outlets, operational groups and/or devices according to at least one further user input, which may comprise restoring power to all power outlets, operational groups and/or devices. For example, the power control device may be configured to restore power to selected devices, such as one or more of the monitored devices, responsive to a first user input from at least one of the user input devices, and to restore power to the controlled devices responsive to a further input from the user input device or to a user input using the monitored device, such as operating a "power on/off" button of the monitored device. In this way, power is not fully restored if the user input device is accidentally operated.

At least one user input device may comprise, be comprised in or generated by the remote agent, for example, by providing one or more selectable buttons or icons or pop-ups or other suitable user interaction means on a display. At least one user input device may comprise a remote hardware device, such as a push button unit. At least one user input device may be incorporated into a component of at least one of the monitored and/or controlled devices, e.g. incorporated into a keyboard or mouse of a computer system or a remote control unit, e.g. for a television or entertainment system or the like. In this way, the user may easily place their computer into a reduced power consumption mode and cut power completely to other devices, such as printers, monitors and the like, quickly and easily by a simple operation of the user input device, e.g. a single button for example, if they simply pop away for a coffee or to use the toilet. Similarly, power can also be quickly and easily restored using the user input device.

The remote agent may be configured to implement or activate a security system, such as a password system. The security system may automatically require a user to meet a security requirement, such as a successfully entered password, before switching the at least one monitored device out of the first or second power control states, e.g. standby mode, hibernate mode and/or restoring power to the at least one controlled and/or monitored device.

The communication system may comprise a wireless communications system, such as a Wi-Fi system and/or an infra-red communications system. The communication system may comprise a powerline communications system for communicating over an electric mains connection. The communication system may comprise a wired connection such as an Ethernet connection.

The communication system may be configured to provide communications between power control devices and/or power connectors, and/or the user input device, and/or a smart meter, and/or a router, internet hub or other communications devices. The power control device may be configured or configurable to connect with other power control devices and/or power connectors via or to form a network. The power control device may be operable as a network hub or router or connection.

The power control device may comprise at least one monitor, for example, for monitoring power, energy or current consumed. The monitor may comprise an ammeter, for example. Optionally, at least one and preferably each power outlet or operational group of the power control device is provided or associated with a monitor. Data associated with the power control device and/or power outlet, such as power, current or energy provided, time, date and the like generated by the at least one monitor may be stored in the memory of the power control device and/or communicated via the communications system to a smart meter, remote server or storage. By monitoring data associated with the power control device and/or on an individual power outlet or operational group basis, which may in turn be associated with device types that are connected to the power outlets, a more detailed breakdown of energy consumption may be provided.

The power control device and/or each power outlet and/or operational group may be provided with a unique identifier or code. In this way, each power control device and/or each power outlet and/or operational group may be identified, e.g. with an associated user and/or the unique identifier and/or code may be operable in networking the power control device and/or each power outlet and/or operational group. In this way the user may monitor and control power consumption on a power control device and/or power outlet and/or operational group level.

The power control device may be configured to be connected or connectable to a data communication channel, such as an internet connection, which may be via the communications system. The power control device may be configured to provide data from the at least one monitor and/or memory that are comprised in or accessible by the power control device to a remote system, such as a server, for example using a cloud application and/or via a smart meter. The remote system, smart meter or cloud application may be configured to provide and store energy, power and/or current use and/or savings data, for example to authorized users, which may include regulatory agencies and/or power companies or providers, utilities companies and the like. The remote system or cloud application may be configured to provide selected data from the power control device to a web portal, web page, social network site, a mobile computing device such as a tablet or smartphone via an app, or the like.

The power control device may be accessible and/or controllable remotely, for example, via the communications system. The power control device may be configured to provide power to selected power outlets, such as one or more master outlets to which the one or more monitored devices are connected or connectable, responsive to remote access or control. For example, the power control device may be accessible and/or controllable via the associated cloud application. The power control device may be configured or programmable to provide power to selected power outlets at specified times.

The remote agent may be configured to be temporarily disabled, e.g. disabled for a specified time before being automatically reinstated.

The power control device may comprise surge protection.

The power control device may comprise or be connectable/disconnectable to an uninterruptable power supply (UPS) battery pack. For example, the power control device may comprise a connector for connecting to a UPS battery pack and may be configured to sit on top of or integrate or dock with the UPS battery pack. The UPS battery pack may comprise a connector that corresponds with the connector on the power control device. The power control device may be connected or connectable to the power inlet via the UPS battery pack. For example, the power inlet or connector may be disconnectable from the power control device. The power inlet or connector may be connectable to the UPS battery pack. As such, the power inlet or connector may be disconnected from the power control device, the power control device may be docked with the UPS battery pack such that it may receive power from or via the UPS battery pack and the power inlet or connector may be connected to the UPS battery pack. The power control device and UPS battery pack may comprise complimentary shaped surfaces so as to fit together in a close or touching fit. The UPS battery pack may be attachable to the power control device. The power control device and/or UPS battery pack may comprise or be connectable to a solar panel or other suitable passive recharging device for recharging the UPS battery pack.

The communications system may be configured to communicate via powerline communications and/or via Wi-Fi.

The power control device may be configured to implement a remote activation and/or deactivation or wake up on LAN function. The power control device may be configured to communicate with a system operated by a content provider or cable or satellite distribution body. The remote activation and/or deactivation or wake up on LAN function may be responsive to a communication received or originating from the system operated by a content provider or cable or satellite distribution body.

According to a second aspect of the present invention is a remote agent for use with at least one remote power control device according to the first aspect, the remote agent being configured to monitor a period since a last user action or input to a monitored device and if the period since the last user action or input to the monitored device is greater than a threshold, provide a corresponding signal to the power control device.

The remote agent may comprise a software or firmware agent. The remote agent may be configured to run on the monitored device. The remote agent may be configured to communicate with the power control device, for example, over a network. The communication may comprise use of a communications component of the monitored device. The remote agent may comprise or be configured to operate via or operate in conjunction with a cloud application.

The remote agent and/or power control device may be configured to place the monitored device in a power controlled mode (e.g. standby or hibernation) if a period since a last user action or input to the monitored device has been exceeded or responsive to a remote user input device.

According to a third aspect of the present invention is a system comprising a power control device according to the first aspect and at least one of a remote agent and/or at least one cloud application for controlling and/or accessing the power control device and/or electrical connector and/or remote server and/or at least one user input device.

The remote agent may comprise a remote agent according to the second aspect.

According to a fourth aspect of the present invention is a method of controlling power to one or more controlled and/or monitored devices, the method comprising receiving a signal from at least one remote agent and/or a remote user input device and controlling the power supplied to one or more of the controlled and/or monitored devices according to the signal received from the remote agent and/or the remote user input device.

The remote agent may run on one or more monitored devices. The controlled device(s) may be distinct and/or separate from the monitored device(s).

The remote agent may comprise or operate via or in conjunction with a cloud application.

According to a fifth aspect of the present invention, is a power distribution or control device comprising a power monitor, storage for storing data generated by the power monitor and a communication system for communicating the data with a remote server and/or smart meter.

The communication system may be configured to communicate with or via a cloud application and/or with a remote agent, such as a software agent, which may be a remote agent of the second aspect. The power distribution or control device may comprise the power control device according to the first aspect and/or at least one feature described in relation to the power control device of the first aspect.

According to a sixth aspect of the present invention is a power distribution or control device comprising a plurality of power outlets, wherein power supplied to selected subsets of the power outlets is selectively controllable responsive to a remote user input device.

The user input device may comprise a button. The user input device may comprise a user input device generated by a software agent, such as an icon, on-screen button, pop-up or other suitable user interaction means. The user input device may be remote from the power distribution or control device. The user input device may be connected and/or communicatable with the power distribution or control device, for example wired or wirelessly connected, and/or connected using radio frequency communications.

The communication apparatus may be configured to communicate with a remote control and/or monitoring application and/or a remote agent, such as a software agent. The power distribution control device may comprise the power control device according to the first aspect and/or at least one feature described in relation to the power control device of the first aspect.

The remote agent and/or remote control and/or monitoring application may comprise or operate via or in conjunction with a cloud application.

According to a seventh aspect of the invention is a power control device, the power control device comprising a communication system for communicating with at least one remote agent and/or remote user input device, wherein the power control device and/or agent is configured to place a monitored device into at least one reduced power mode responsive to a period since a last user action or input to the monitored device and/or responsive to operation of the remote user input device.

The remote agent may comprise or operate via or in conjunction with a cloud application.

The remote agent may be configured to determine the period since a last user action or input to the monitored device and signal the power control device when the period exceeds at least one threshold. The power control device may be configured to control power to the monitored device and/or at least one further device associated and/or connected to it responsive to the signal from the remote agent. The power control device may comprise a power control device according to the first aspect or at least one feature described in relation thereto.

According to an eighth aspect of the present invention is a user input device configured for use with the power control device according to the first, sixth and/or seventh aspects and/or a system according to the third aspect.

According to a ninth aspect of the present invention is a computer program product for implementing the apparatus of any of the first, second, third, fifth, sixth, seventh or eighth aspects or the method of the fourth aspect.

According to a tenth aspect of the present invention is a carrier medium comprising the computer program product of the ninth aspect or apparatus with loaded and/or programmed with the computer program product of the ninth aspect.

Features analogous to those described in relation to any of the above aspects of invention may also be seperably or jointly applicable to any of the other aspects of invention. Features analogous to those described above in relation to an apparatus may also be provided in a corresponding method and vice versa.

Advantages of these embodiments are set out hereafter, and further details and features of each of these embodiments are defined in the accompanying dependent claims and elsewhere in the following detailed description.

### Brief Description of the Drawings

At least one embodiment of the invention will now be described, by way of example only, with reference to the accompanying drawings, in which:
Figure 1 is a schematic view of a power control device;
Figure 2 is an external view of the power control device of Figure 1;
Figure 3 is an example of a user input device for use with the power control device of Figures 1 and 2;
Figure 4 is an alternative or additional power control device that is operable with the power control device of Figures 1 and 2;
Figure 5 shows a system comprising the power control device of Figures 1 and 2;
Figure 6a is an example of a network comprising the power control device of Figures 1 and 2;
Figure 6b is an alternative example of a network comprising the power control device of Figures 1 and 2;
Figure 7 is a flowchart illustrating a method of operating the system of Figure 5;
Figure 8 is a flowchart illustrating an alternative or additional method of operating the power control device of Figures 1 and 2;
Figure 9 is a flowchart illustrating a method of operating the power control device of Figures 1 and 2 with a UPS battery pack;
Figure 10 is a schematic showing collation and processing of data from multiple associated users operating the power control device of Figures 1 and 2; and
Figure 11 is a schematic showing the collection, processing and sharing of data generated by power control devices of Figures 1 and 2.

### Detailed Description of the Drawings

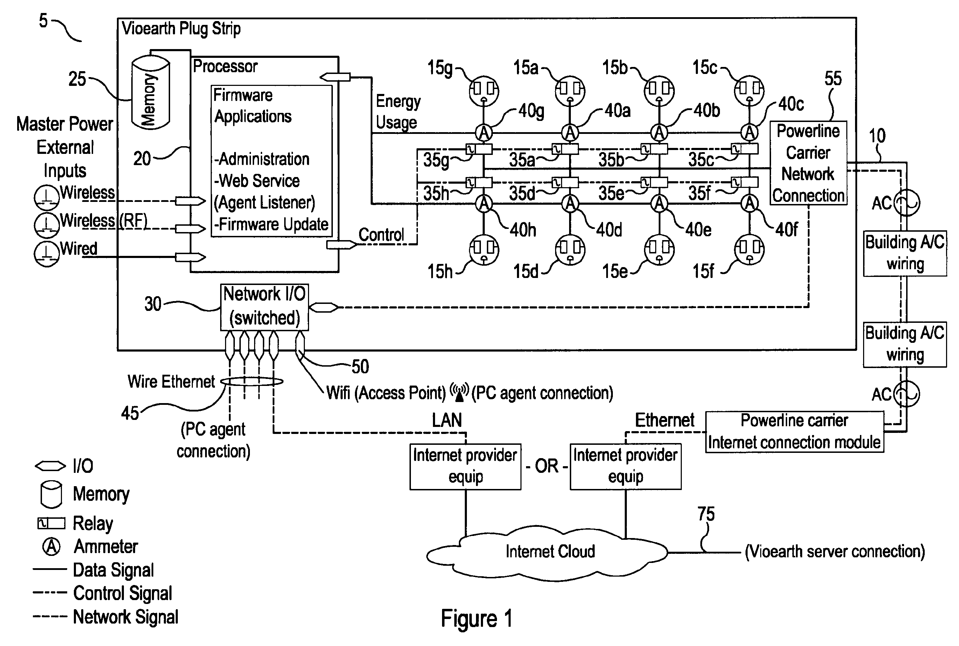

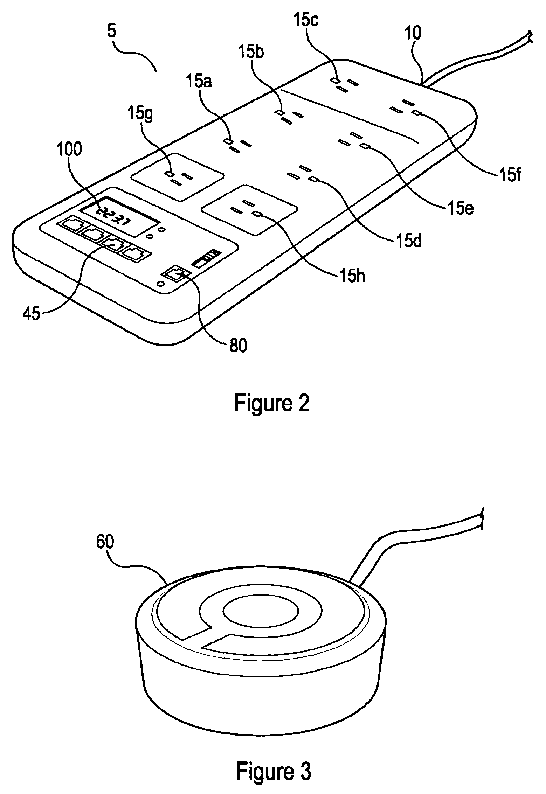

Figures 1 and 2 show a power control device 5 for controlling power to a plurality of electrical devices. In this particular embodiment, the power control device 5 is in the form of an electrical extension or distribution socket strip. However, it will be appreciated that the power control device 5 may be embodied in an alternative form, such as a wall socket or floor port configuration.

The power control device 5 comprises a power inlet 10, a plurality of power outlets 15a-15h, a processor 20, memory 25 and a communications system 30. The power inlet 10 is connected to a plug for connection to a mains electricity supply. The power inlet 10 is connected to each of the plurality of power outlets 15a-15h via respective relays 35a-35h and monitors 40a-40h in the form of ammeters. Each relay 35a-35h is operable under the control of the processor 20 to selectively connect and disconnect the associated power outlet 15a-15h from the power inlet 10. Each monitor 40a-40h is configured to measure the current supplied to the associated power outlet 15a-15h. The monitors 40a-40h are in communication with the processor 20, which logs the current supplied to each power outlet 15a-15h with time and stores this energy usage data in the memory 25. Each power outlet 15a-15h is assigned a unique identifier so that energy consumption associated with a particular power outlet 15a-15h can be identified and recorded and the power outlets 15a-15h can be individually controlled.

The communications system 30 comprises wired communications apparatus such as one or more Ethernet or local area network adaptors 45 and wireless communications apparatus 50 such as a Wi-Fi adaptor. Advantageously, the communication system 30 comprises a powerline network adapter 55, which connects to the power inlet 10 and is configured to communicate data over the electrical mains. Each power control device 5 is assigned a unique identifier, which is usable to identify the user associated with the power control device 5 and also to identify the power control device 5 when it is communicating in a network using the communications system 30.

The communications system 30 is operable to communicate with one or more remote user input devices 60, one or more remote agents 65, other power control devices 5, 5', network components 70 such as modems, routers, network hubs and the like, and remote systems and servers 75, for example, to allow the logging and/or sharing of energy usage related data. Advantageously, the communication system 30 also allows remote access to the power control device 5, for example, to power up selected power outlets 15a-15h (typically the master sockets 15g) remotely and/or to obtain energy consumption data remotely.

In particular, the power control device 5 can communicate with the one or more remote user input devices 60 (as shown in Figure 3) via the communications system 30. In this specific example, the user input device 60 is a button press input device that is connected by a cable that can be plugged into an associated socket 80 in the power control device 5. However, it will be appreciated that remote user input devices that communicate using other means such as wirelessly using techniques such as infra-red, Bluetooth, Wi-Fi or the like could also be used.

Furthermore, whilst the user input device 60 in this embodiment is physical, the user input device can also be virtual, for example, an icon, button, pop-up or other suitable user interaction means that is displayed by the remote agent 65 on a screen of a monitored device 85. In this case, the user can operate the user input device 60, e.g. by clicking on the icon or the like, in order to manually trigger the software agent 65 and/or power control device 5 to activate/deactivate a power control mode or state. In another example, the user input device 60 is embodied in a device, for example, a smartphone and/or tablet computing device running a suitable application, that is in communication with the power control device 5 via a cloud application.

The power outlets 15a-15h are grouped into operational groups, each operational group being controlled in a different manner by the power control device 5. In particular, in a preferred embodiment, one or more of the power outlets 15g are designated as a master socket, into which a main power cable of the monitored device 85 (e.g. computer) is plugged. The power control device 5 is operable via the software agent 65 to place any monitored device into one or more reduced power modes (e.g. standby and/or hibernate) responsive to periods of user inactivity. The power supplied to the master sockets 15g is controllable in a manner that compliments this implementation of reduced power modes. One or more of the power outlets 15a-15f, in this case six, are designated as controlled or peripheral sockets. These controlled or peripheral sockets 15a-15f are allocated for peripheral devices 95 such as monitors, desktop speakers, printer etc. that should be powered down when the monitored device(s) 85 that are plugged into the master socket(s) 15g are not being used. Advantageously some of the peripheral sockets 15c, 15f can be spaced apart from the other sockets 15a, 15b, 15d, 15e, 15g, 15h by a greater distance than the distance between the other sockets 15a, 15b, 15d, 15e, 15g, 15h in order to accommodate plugs that are integrated with a transformer. These transformer peripheral sockets 15c, 15f otherwise operate in the same manner as the rest of the peripheral sockets 15a, 15b, 15d, 15e, 15g, 15h. One or more of the power outlets 15h are designated as persistent sockets. The persistent sockets 15h are supplied with power for a longer period of user inactivity than the peripheral sockets 15a-15f and, for example, can be used for devices 90 that generally require to be left on such as fax machines or battery chargers or recording devices.

Some further examples of suitable peripherals 95 that may be connected to the controlled sockets 15a-15f include lamps, televisions, music systems, DVD players, games systems, scanners, air conditioning systems, heaters, sound systems, speakers, projectors, and the like.

In an optional but not essential embodiment, the power control device 5 is provided with a display 100 for displaying energy consumption data calculated by the processor 20 and derived from the monitor data. In an alternative or additional embodiment, the energy consumption data is available via one or more remote systems such as an application running on a mobile device, online via an internet interface, via a cloud based portal, and/or on a display that may, for example, be provided on a device connected to or that can communicate with the power control device, such as the monitored device 85 or mobile device. This may comprise use of a pop-up and/or tray icon and/or virtual icon or button and/or the like.

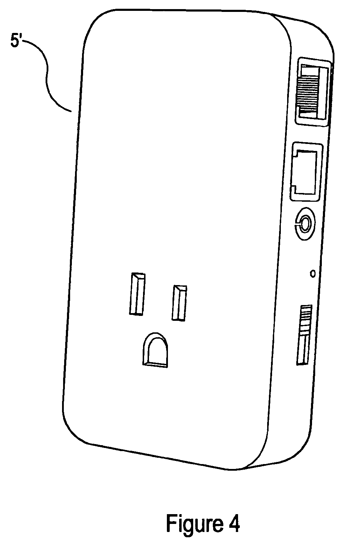

The communication system 30 is operable to communicate with other power control devices 5, 5' in order to share or collate data or increase the number of controlled power outlets 15a-15f and thereby the number of controlled devices 95. For example, this allows devices such as printers that may be remote from the power control device 5 and/or monitored device 85 to be controlled by the power control device 5, responsive to the remote agent 65. The other power control devices 5, 5' may be substantially the same or different. For example, the other power control devices 5' may comprise control devices having reduced functionality, such as no energy display, and/or more or less electrical connectors. An example of such a power control device 5' is shown in Figure 4.

Optionally the user may be able to select that the other power control device 5' is operable in a different manner. For example, using a tray icon or the cloud application the user could decide that the equipment connected to the other power control device 5' should operate within selected time windows, e.g. between the hours of 9-5, and then be switched off. This feature is particularly advantageous for devices such as printers/photocopiers/fax machines/vending machines/water coolers etc. In this way, the other power control device 5' would run separately from power control device 5.

In addition, as can be seen from Figure 4, in certain embodiments, the user has the option of connecting a user input device 60 to the other power control device 5' to allow separate operation of the other power control device 5'. In this instance, the other power control device 5' would run entirely independently from the power control device 5 and the remote agent 65. However, the user would still be able to see the other power control device 5' on their online portal/cloud application and/or smart phone/tablet etc and change its operation/preferences or link with power control device 5.

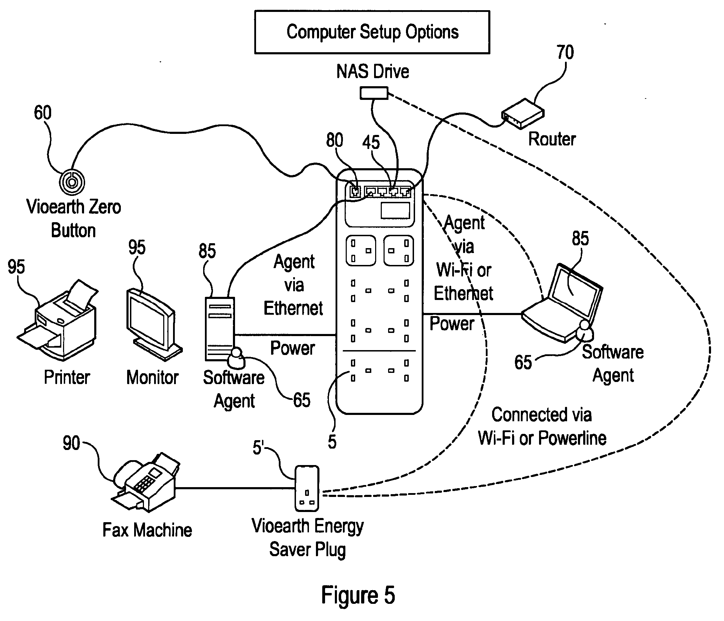

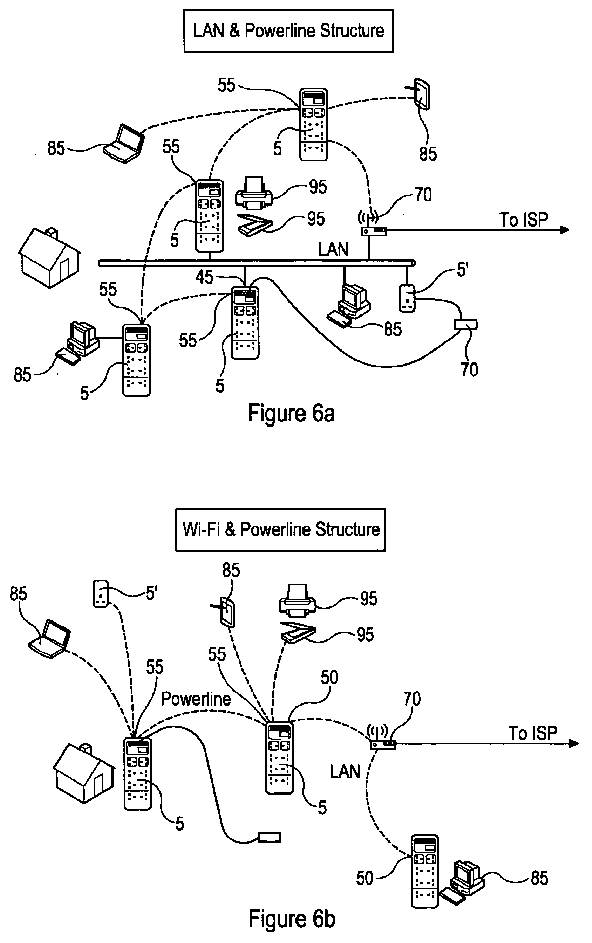

The communication system 30 is operable to communicate with devices that are network enabled, such as personal computers and suitable smart devices such as peripherals and even home entertainment systems, as shown in Figure 5. Preferably, the system uses a combination of networking using the mains electricity powerline 55 and wired LAN 45 and wireless Wi-Fi 50 connections, examples of which are illustrated in Figures 6a and 6b.

In particular, the remote agent 65 may be installed on one or more monitored devices 85, wherein the remote agents 65 are configured to communicate with the power control device 5 via the communication system 30. In one embodiment, the remote agent 65 is a software or firmware agent embodied in a program, for example for running on the monitored device 85 (e.g. a personal computer or some other programmable or processor based device). Advantageously, in this particular embodiment, the remote agents 65 communicate with the power control device 5 via a communications system of the monitored device 85. However, it will be appreciated that the invention is not intended to be limited to this arrangement and it will be appreciated that other arrangements may be contemplated. For example, the remote agent 65 need not run on the monitored device 85 but may instead be configured to access it remotely. The method of communication between the remote agent 65 and the power control device 5 depends on user preference and the nature of the device being connected and may comprise, for example, a wired or wireless connection.

The remote agent 65 is configured to monitor user interaction with the monitored device 85 with which it is associated or on which it is hosted. In particular, the remote agent 65 comprises a timer that is configured to monitor a time elapsed since a last user input to the monitored device 85 and monitor if the time since the last user input exceeds a first threshold. The remote agent 65 is configured to signal the power control device 5 and also to issue a command to the monitored device 85 to enter a first power control mode when the first threshold is reached. The power control device 5 is then configured to control the power supplied to selected power outlets 15a-15g of the power control device responsive to the signals received from the remote agent 65.

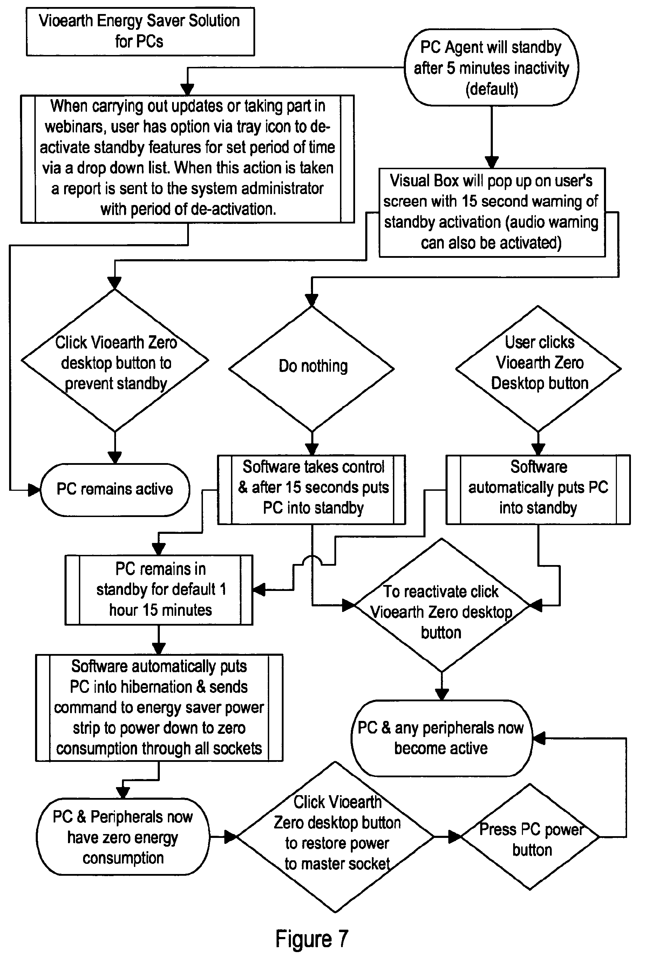

The operation of the system is outlined with reference to Figure 7.

In a specific example, the first threshold is a default partial power down threshold (e.g. five minutes) of inactivity by the user of the monitored device 85. The timer is operable to monitor user interaction with, or input to, the monitored device 85 and determine a time elapsed since a last user input or other identifiable user interaction with the monitored device 85. The remote agent 65 is configured to provide a warning to the user after a period of inactivity at a predetermined or selected time before the first threshold. Preferably, the warning can make use of the monitored device 85 or another device that is in communication with the power control device 5 / remote agent 65 to provide the warning. Examples of suitable warnings include displaying a pop-up box in a display and/or by providing an audible warning via a sound card / speakers of the monitored device 85 and/or a vibrating or tactile alert. The remote agent 65 is further configured to monitor user input / interaction with the monitored device 85 for a further time period after providing the warning, for example, fifteen seconds. If during the further time period the user interacts with the monitored device 85, for example, by clicking a mouse button or pressing a key or preferably by clicking an icon or the like on the screen or by operating the remote user input device 60 associated with the power control device 5, then the timer is reset and the monitored device 85 remains active. If no user interaction is detected by the remote agent 65 or monitored device 85 during the further period, then the remote agent 65 signals the power control device 5 via a communications system of the monitored device 85 and then activates a first power control mode in the form of a standby or sleep function of the monitored device 85. The standby or sleep mode is a reduced power consumption mode, for example, where power is supplied to and drawn by the monitored device 85 but some functions or components are deactivated, e.g. a display. However, it will be appreciated that the first power control mode may optionally be a different mode to a standby or sleep mode.

Just before putting the monitored device 85 into the first power control mode, if the user has selected security features, such as password access to the monitored device 85, then the remote agent 65 locks the monitored device 85 such that satisfaction of the security features, such as input of a password, is required to restore the monitored device 85. In this way, security of the monitored device 85 may be improved.

In a preferred embodiment of the invention, the remote agent 65 provides an input means such as an icon, pop-up, virtual button or tool tray available on a display of the monitored device 85. The user can temporarily manually disable the timer/idle time monitoring facility of the remote agent 65, e.g. for a user selected time, to allow a non-interactive program to run. In this case, a report may be sent to the system administrator to prevent misuse of this facility.

In an optional alternative or additional embodiment, the software agent 65 is configured to monitor for a critical or specified program running on the monitored device 85. The critical or specified program can be specified by a user and/or be pre-provided, for example, by an operator or manufacturer, and stored in a look-up-table accessible by the remote agent 65. If a critical or specified program is determined to be running, then the remote agent 65 does not put the monitored device 85 into standby for as long as it is determined that the critical or specified program is still running. In this way, the monitored device 85 is not automatically put into shutdown when it is undesirable to do so, for example when a program such as a virus scan or disk defragmentation or video conference is running, that requires the monitored device 85 to be operational without necessarily requiring user input.

If it is determined that a critical program is running or that the timer/idle time monitor has been manually disabled or if the user performs the required interaction during the further period then the monitored device 85 remains active and the timer is reset if required.

When the power control device 5 receives the signal that the time since the last user input has exceeded the first threshold from the remote agent 65 via the communications system 30, the power control device 5 disconnects the power to the controlled or peripheral sockets 15a-15f but maintains power to the master socket 15g and the persistent socket 15h. In this way, secondary devices or peripherals 95 associated with the monitored device 85 such as the display, sound system, printer, scanner and the like can be plugged into controlled or peripheral sockets 15a-15f of the power control device 5 such that power supply to them is disconnected when the associated monitored device 85 (e.g. the computer) is put into standby, thereby saving energy that would otherwise be wasted by having these peripherals 95 or secondary devices receiving full or standby power when not required. However, devices 85, 90 that are plugged into the master and persistent sockets 15g, 15h, such as the computer or a wireless internet router, that may require a more permanent power supply or need to be shut down in a controlled manner can be left with power.

Although the above embodiment describes the first threshold being reached and/or exceeded after a period without any user input being detected, it will be appreciated that the monitored device 85 could manually be instructed to enter standby or sleep mode for example, by use of a pop-up and/or tray icon and/or virtual icon or button and/or the like and/or the user input device 60.

Once the monitored device 85 has been placed in the first power control mode, the power control device 5 operates a timer and monitors for user input via the remote input device 60. In this way, the user can restore power by operating the remote input device 60, for example by pressing a button. In this case, the remote agent 65 switches the monitored device 85 back into an active state and the power control device 5 reinstates power to the controlled sockets 15a-15f and thereby the peripherals 95.

However, if a further or second threshold time is then reached without any user input being detected (e.g. if the monitored device 85 has remained in standby for over 1.25 hours), then the remote agent 65 is adapted to perform a controlled placing of the monitored device 85 into a second power control mode or state, such as a hibernation mode, and also signals this to the power control device 5. Whereas the first power control mode is a mode wherein power consumption of the monitored device 85 is reduced, e.g. by disabling certain functions or components of the monitored device 85, the second power control mode is a mode in which the power consumption is reduced further, for example, such that substantially no or negligible power is drawn by the monitored device 85. The hibernation mode is a mode in which at least some data stored in RAM of the monitored device 85, such as program data, is copied to a persistent memory, such as a hard drive, and the monitored device 85 is deactivated such that it draws substantially no mains power. In this way, when power is restored, the data can be retrieved from the persistent storage to give the impression that the programs were in the same state they were in when the monitored device 85 was put into hibernation. Again, it will be appreciated that whilst the second power control mode in this embodiment is a hibernation mode, other power control modes may be used instead.

Although the above embodiment describes the monitored device being directly switched from the first power control mode to the second power control mode, it will be appreciated that, in embodiments, the power control device can optionally be configured to indirectly switch between power control modes. For example, the monitored device can be temporarily brought out of the first power control mode (e.g. a standby or sleep mode) in order to restore the necessary function to the monitored device to allow it to enter the second power control mode (e.g. a hibernation mode).

In addition, once the second threshold has been reached, the power control device 5 disconnects power from the persistent socket 15h. In this way, devices 90 that require power over longer term periods such as battery chargers and the like can be plugged into the persistent sockets 15h and so receive power for longer periods of user inactivity than the devices 95 plugged into the peripheral sockets 15a-15f. The devices 90 plugged into the persistent socket 15h are only shut down when the monitored device 85 has been inactive for an extended period, for example, if the user has left the building or has gone to bed for the night.

Once a predetermined or user selected delay has passed after the second threshold has been exceeded and the monitored device 85 has been signaled to enter the hibernation mode, the power control device 5 disconnects the power to the master socket 15g such that the monitored device 85 and its associated devices/peripherals 90, 95 now have zero power consumption. It will be appreciated that some devices may take some time to complete entry into the second power control mode (e.g. hibernation). The delay between the remote software agent 65 signaling the monitored device 85 to enter the second power control mode and the disconnection of power to the master sockets 15g prevents the monitored device 85 from being disconnected from the power supply before the hibernation mode is safely entered, thereby preventing loss of user data that may otherwise result.

Although the above embodiment describes the second threshold being reached and/or exceeded after a period without any user input being detected, it will be appreciated that, in embodiments, the monitored device 85 could manually be instructed to enter hibernation mode for example, by use of a pop-up and/or tray icon and/or virtual icon or button and/or the like and/or the user input device 60.

In this case, in order to restart the system, the user must operate the physical user input device 60 associated with or connected to the power control device 5, whereupon the power control device 5 restores power to the master socket 15g and thereby the monitored device 85.

Optionally, the user is required to perform another action such as pressing a power button of the monitored device 85 to restart the monitored device 85 in the conventional manner. After the power button of the monitored device 85 has been pressed, the power control device 5 also restores power to the controlled or peripheral sockets 15a-15f and persistent socket 15h and thereby any peripherals 90, 95 or associated or secondary equipment. In this way, an accidental operation of the user input device 60 does not lead to a full system re-powering, but instead a two stage operation is required to re-power the peripheral or secondary devices 95 and 90. In the case of an accidental operation of the user input device 60, if suitable action is not made, for example, a power button of the monitored device 85 is not pressed during a defined period, e.g. 3 mins, then the power control device 5 will recognize this and disconnect the power to the master socket 15g once again with the assumption that this has been an accidental operation.

Using the above method, power consumption of a monitored device 85 such as a computer and its associated peripherals can be automatically reduced to zero without user input, whilst at the same time doing so in a manner that protects the execution of critical programs and shuts the monitored device 85 down in a controlled manner.

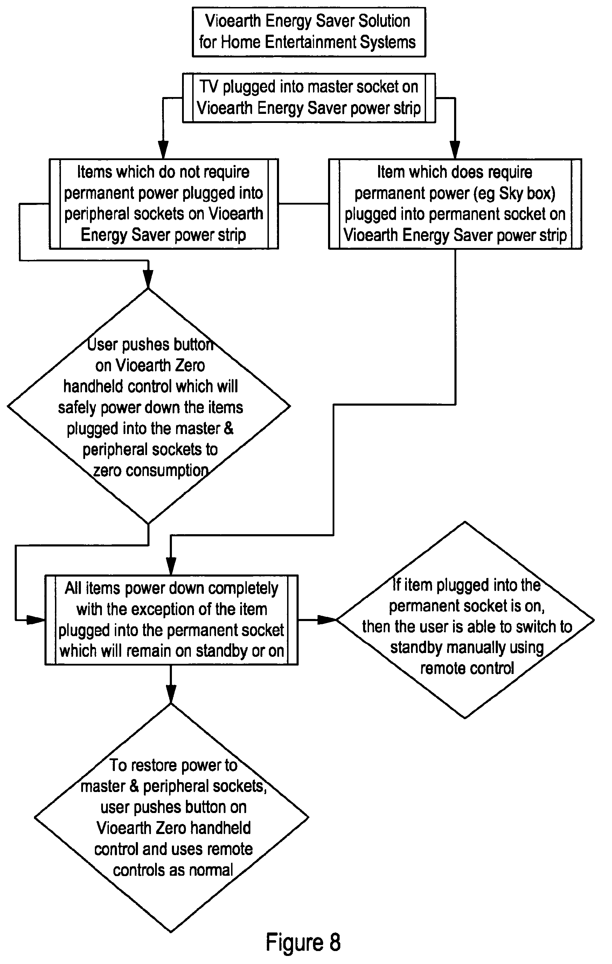

In addition to the above, the power saving features provided by the power control device 5 can be activated manually via a suitable operation of the user input device 60, for example, as illustrated in Figures 7 and 8. In this case, upon operation of the user input device 60, the process proceeds in a similar manner to that described above in relation to Figure 7 but starting from the step of putting the monitored device 85 into standby.

This feature can also be used to control power of appliances that need not be programmable and/or need not have any processing capability, for example, a home entertainment system comprising components such as a television, a digital television recorder, and a DVD player electrically connected to a power control device 5. In this case, the user input device 60 is paired with the power control device 5 into which the appliances are connected.

In this case, items that do not require permanent power, such as the DVD player or games console are plugged into the peripheral or controlled sockets 15a-15f. Items that require more permanent power, such as the digital television recorder, can be plugged into the persistent or master power sockets 15g, 15h.

The user can then selectively disconnect the power supply from the devices 85, 90, 95 plugged into the power outlets 15a-15h by using the user input device 60. Power supply to the persistent socket 15h and/or master socket 15g can be selectively re-activated by the power control device 5 at a later time, for example in response to a timed wake-up function or to a remote wake up over network as described below to perform a required function before having power disconnected from them automatically or responsive to user control. The user can also quickly and simply restore power to the power outlets 15a-15h and to the devices connected thereto by operation of the user input device 60. In this way, even devices such as digital recorders that may need to be active to record a television program for example, can be powered down quickly to zero power consumption when not in use by use of the user input device 60 but be re-supplied with power by the power control device 5 either automatically (e.g. using a time specified wake-up facility) or manually (e.g. using a wake-up over network facility or using an application on a device such as a mobile device, for example) when use of the device is required (e.g. when the program to be recorded is being transmitted). This may require partnering with a content provider or cable or satellite distribution body. For example, if a system of the content provider or cable or satellite distribution body is programmed or set to record or otherwise use or process content (which optionally can be programmed or set remotely using an application provided by the content provider or distribution body, which may run on a mobile device), then the content provider or distribution body's system may communicate this to the power control device 5, 5', preferably via an intermediary network. The power control device 5, 5' may then restore power to the appropriate power outlets necessary to allow a recording or other processing or operating device to perform the requested actions.

Although control of non-programmable devices via the user input device 60 associated with the power control device 5 is a preferred method for controlling such devices, it will be appreciated that alternative or additional embodiments of controlling such devices could be used. For example, the power control device 5 can be configured to determine if the monitored device 85 has been put into standby or shut down. For example, the communications system 30 of the power control device 5 optionally comprises an infra-red sensor (not shown) for detecting signals produced by a remote control of a monitored device 85, such as a television. The power control device 5 is configured or configurable (e.g. by training or by being provided with a user selectable look-up table or by accessing data over a network) to recognize at least one command transmitted by the remote control, such as the signal produced when the standby button is pressed. When the power control device 5 detects that the off or standby button of the remote control has been pressed, then the power control device 5 automatically powers down and disconnects power to the peripheral or controlled sockets 15a-15f and thereby any devices plugged into those sockets, which may comprise for example DVD and games players.

It will be appreciated that the television remote control need not be used and that other methods for determining a power off condition may be used, for example by monitoring the power drawn by the monitored device 85 or by communicating with the monitored device 85 over a suitable wired or wireless network connection, if such is available.

Once in the powered down state, the home entertainment system can be powered up by operating the user input means.

Advantageously, the power control device 5 is provided with surge protection and is optionally connectable to a UPS battery pack (not shown).

The power control device 5 is configured such that the user can connect a UPS battery pack, e.g. via a docking port on the bottom of the power control device. In an optional embodiment, the power inlet 10 or plug is disconnectable from the power control device 5 and the power inlet 10 or plug may be connectable to the UPS battery pack. In this embodiment, the power inlet or connector can be disconnected from the power control device, the power control device docked with the UPS battery pack so that it can receive power from or via the UPS battery pack and the power inlet or connector is connected to the UPS battery pack.

In the event of a power outage, this enables the safe power down of the monitored device 85 and its peripherals 90, 95 and secondary devices. Dependent on the size of the UPS battery, the UPS battery pack may provide power for a short time, e.g. in the order of minutes, to allow shut down or for a longer time, in the order of one or more hours, to allow the user to continue working during power outages. In an optional embodiment, the UPS battery pack can be provided with passive recharging means such as solar panels for maintaining charge in the UPS battery pack.

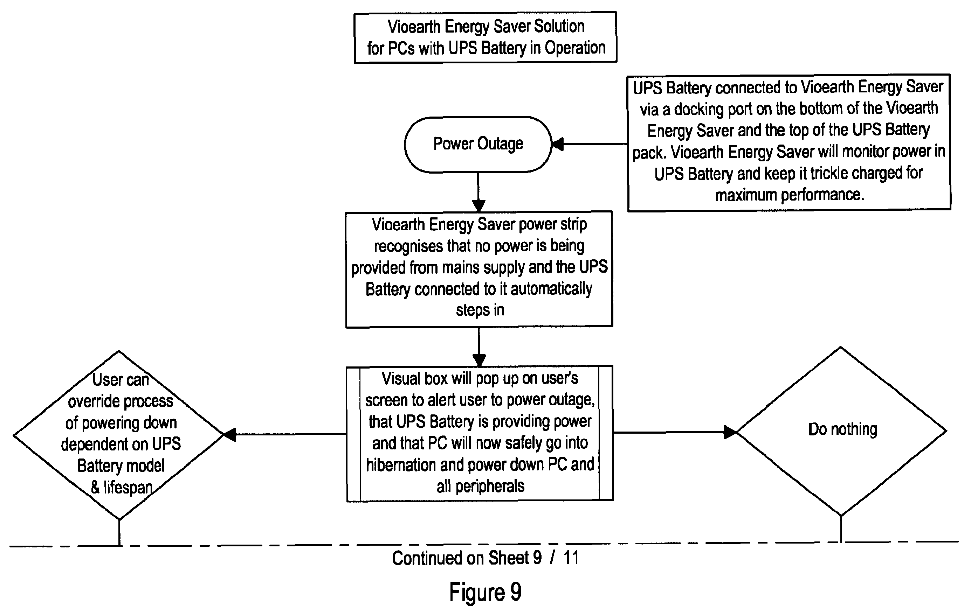

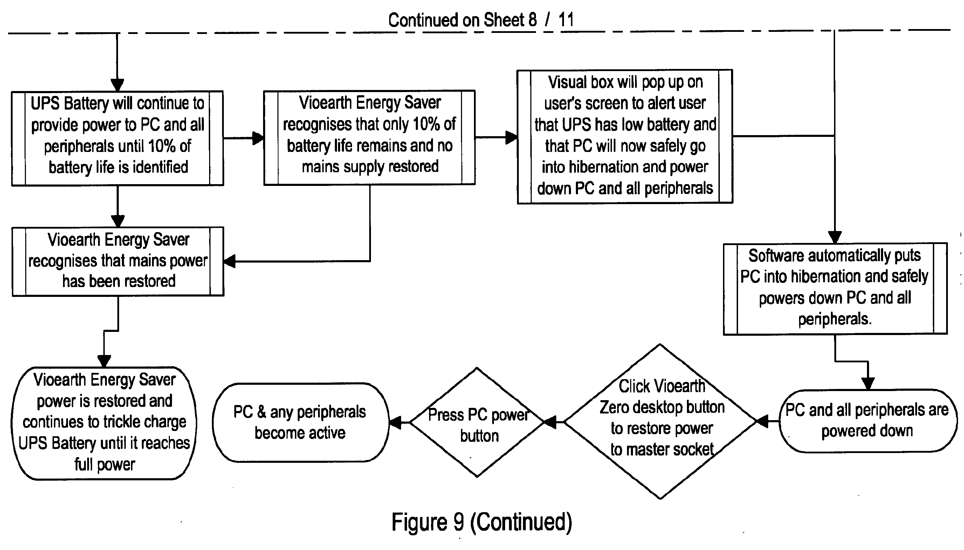

An operation of the power control device using the UPS battery pack is described below with reference to Figure 9.

When the power control device 5 detects that no power is being provided from the mains supply, the UPS battery is automatically engaged. The remote agent 65 signals the user that the system is operating using the UPS battery pack and indicates that the monitored device 85 will enter a power saving mode and that the peripherals 90, 95 and/or the monitored device 85 will be powered down. If no action is taken by the user before a threshold time elapses, then the remote agent 65 automatically places the monitored device 85 into the second energy control mode, e.g. hibernation, and then powers down the master sockets 15g, all peripheral sockets 15a-15f and the persistent socket 15h. After this, the power to the master socket 15g can be restored responsive to the user input device 60 and power to the peripheral sockets 15a-15f and the persistent socket 15h is restored by pressing the "power on/off" button of the monitored device 85, in a two stage restore, as detailed above.

If the model of UPS battery pack permits, the user can opt to over-ride the power down process, for example, by operating the user input device 60. In this case, the UPS battery continues until only a cut-off limit (e.g. 10%) of battery power remains. At this point, the user is alerted again and, after a delay, the monitored device 85 is placed in the second power control mode, e.g. hibernation and the peripherals 90, 95 are powered off.

The power control device 5 is configured to monitor for mains power being restored. In this case, mains power is reconnected to, and the UPS battery disconnected from, the relevant outlet sockets 15a-15h. Whilst the mains power is available, the power control device 5 selectively trickle charges the UPS battery pack so that the charge of the UPS battery is within an operational window (e.g. between 98% and 100% charge), for example by activating the trickle charge when the charge of the UPS battery falls below 98% and deactivating the trickle charge when the battery reaches 100% charge.

Importantly, since power outlets 15a-15h of the power control device 5 are provided with monitors 40a-40h, the power control device 5 can monitor power consumption by devices 85, 90, 95 connected to it and also determine any energy saving made by the power control device 5. For example, the processor 20 may be configured to monitor power consumption of each connected device 85, 90, 95 with time and date and store the resulting data in the memory 25.

Optionally, the power control device 5 is configured to alert the user when a potentially undesirable power consumption situation occurs, such as a particularly high and/or prolonged period of power consumption. For example, the alert condition can be selected by a user, preprogrammed or performed according to rules, for example, by comparing against historical, averaged or typical data, which may comprise data collected previously by that particular power control device 5, or for a particular location or for the particular connected devices 85, 90, 95. In this way, the user can be quickly alerted (which may optionally include remote alerts sent over a network) to any unusual or undesirable power consumption situation and take steps to lower the consumption if required before too much power is consumed.

When multiple power control devices 5, 5' are used, then the power control devices 5, 5' are configured to automatically form a network, preferably via an electrical mains powerline communications network but optionally may be wirelessly or via a wired connection. In this way, the range of the system is extended as information can be passed between power control devices 5, 5' in the network.

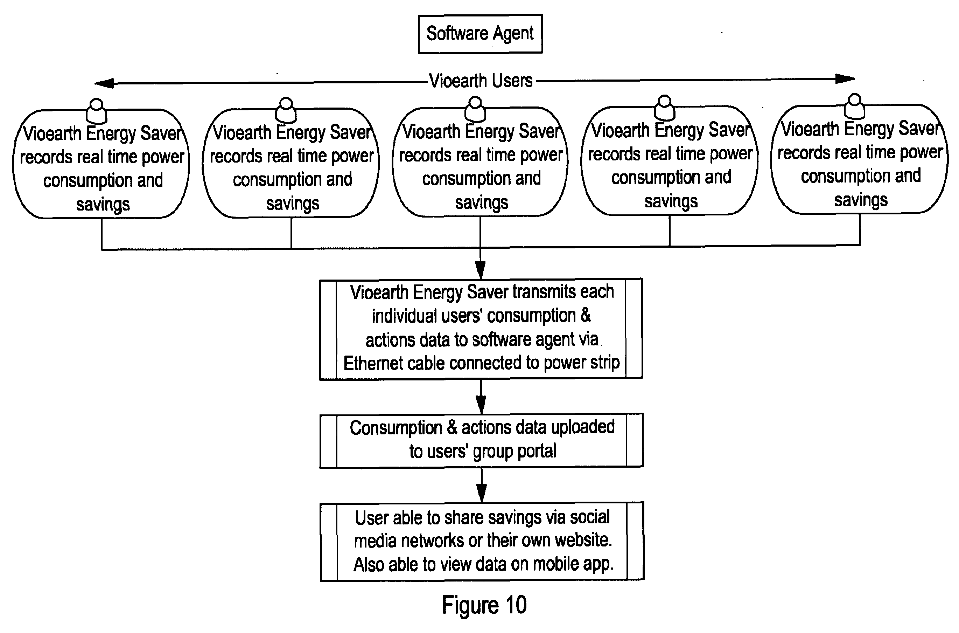

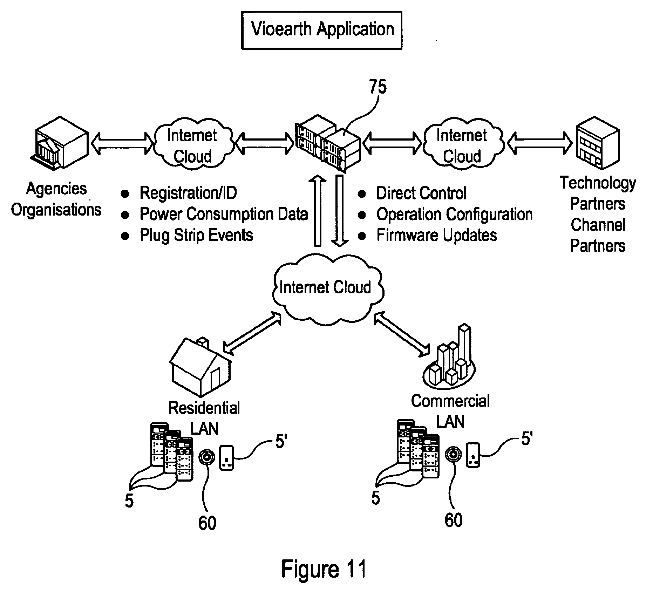

Each power control device 5, 5' is provided with a unique ID to allow the device to be identified and to allow communications to be routed accordingly. The user can register any power control devices 5, 5' and associate them with the user's account. The unique ID can also be associated with other parameters such as a location, operator, the devices 85, 90, 95 connected and the like. If any of the power control devices 5, 5' in the network are connected to an internet access point such as a LAN or an internet router, then the power control devices 5, 5' automatically connect via a cloud application to the remote server 75. For example, the server 75 can be used to collate and store usage data collected by the energy monitors 40a-40h of connected power control devices 5, 5' that are registered to the user's account, as shown in Figures 10 and 11.

In this way, the user can easily access and view their current and historical energy consumption data for all of their power control devices 5, 5' in a single action. For example, the user will be able to see where, when and how the user consumed power and is able to make informed decisions as to how to best cut their power usage. The user may be able to, for example, provide details of the user's current energy tariff, so that expenditure and cost savings can be easily identified. Advantageously, the power control device 5, 5' and/or the server 75 are configured to determine savings made through use of the power control devices 5, 5'.

Beneficially, the data on the server 75 can be optionally sent to web-portals, web pages, social networking sites and the like in order to advertise the energy reduction efforts made by the users. Similarly, the user can access the energy consumption and saving data from the server remotely. Optionally, the energy usage or at least an aggregated energy usage can be supplied to a third party, such as a power supplier, by the server, for example, to ensure that the user is on the most suitable tariff and/or to identify energy savings that could be made. In another example, the power control device(s) 5, 5' can be in communication with a smart meter or similar device, which can provide power usage information to the power supplier.

As shown in Figure 11, beneficially, the server 75 can be configured to compile energy consumption and savings data associated with a user and provide the data to external agencies for the purposes of documenting "certified" savings, for example to qualify for grants, tax relief or credits. Furthermore, any errors, faults or generalized operating parameters recorded by the power control devices 5, 5' can be sent to technology partners for product improvement.

Advantageously, communication between the power control devices 5, 5' and the cloud can also be used to register the power control device 5, 5' and software and provide updates to the power control device software.

The power control device(s) 5 and/or 5' can be accessed remotely in order to employ "remote wake up over network" functionality. In this way, a user can remotely connect with the power control device 5, 5' via the communications system 30 in order to restore power to the master socket 15g and/or peripheral or selected control sockets 15a-15f and/or the persistent socket 15h and thereby the monitored device 85 or other devices 90, 95 connected to the power control device 5 and/or 5' via these sockets. For example, a user's computer may be switched off but the user may wish to access their computer remotely, e.g. to use a remote access service such as GoToMyPC or LogMeIn. A user can remotely restore power to their computer via the power control device 5, 5' before accessing the computer remotely. After access is completed, the power control device 5, 5' will then disconnect power from the power outlets 15a-15h and thereby to any devices connected thereto either automatically using the procedure described above in relation to Figure 7 or responsive to user input.

Similarly, the power control device 5 may be configured to restore power to selected power outlets 15a-15g at specified time(s). For example, if a user wishes to record a television show at a certain time, then power can be restored to a socket with which a digital recording device is connected at the required time, and then powered down again once the recording of the show has been completed. For example, this procedure can be used to restore power to the persistent socket 15h only at specified times, as described above. It will also be appreciated that the power control device may be configured to restore power to different sockets at different specified times, for example, power to the master socket 15g may be restored at different times to the persistent socket 15h, to allow for individual control of multiple devices.

Furthermore, the communication network comprising the power control devices 5, 5' may be utilized by a network enabled device connected thereto in order to connect to the internet or other network related services via the power control devices 5, 5', for example to utilize the powerline mains network connectivity of the power control devices 5, 5' or to minimize the number of network connections and/or cables used.

Although a detailed example of at least one embodiment of the present invention is described above, certain modifications to the above example would be obvious to a skilled person. As such, the scope of the invention is limited only by the accompanying claims.

For example, whilst embodiments of the present invention are described above in terms of operation with a programmable and network enabled device such as a computer and its peripherals, and embodiments are described in relation to operation of non-programmable devices such as television and home entertainment systems, it will be appreciated that the devices of the present invention may comprise or be comprised in either or both of these embodiments, i.e. a power control device according to the present invention may be configured to control only non-programmable devices, or only programmable devices or configured to control both.

In addition, whilst specific times are given as examples of thresholds, it will be appreciated that the invention is not limited to those times.

Furthermore, in some embodiments, such as those in which the power control device 5 is embodied in or comprises or is operationally connected to floor or wall sockets, the power control device(s) 5, 5' and/or individual power outlets 15a-15h may be in communication with a controlling and/or monitoring application, such as a cloud application, wherein the unique identifiers assigned to each power control device 5 and/or power outlet 15a-15h can be used to identify the power outlet 15a-15h, in a similar fashion to network ports on a computer network. The power control device(s) 5, 5' can then communicate with a user input device 60 or monitoring application or agent 65, which may be cloud based, over the network (e.g. wirelessly and/or via a communications over a powerline to a router or other internet or network connection point). The user input device 60 and/or remote agent 65 are also connected to the remote control or monitoring application over the network. Each of these power outlets 15a-15h and/or power control device(s) 5, 5' can be associated with a connected device such as a home entertainment system or computer. In this way, the power consumption by or through the power outlet 15a-15h or power control device(s) 5, 5' can be monitored and the power supplied from the power outlet 15a-15h or power control device(s) 5, 5' can be controlled via the user input device 60 and/or remote agent 65 using a cloud based system.

Although embodiments of a power control device 5 that is embodied in an extension socket strip and floor or wall sockets are described above it will be appreciated that the power control device could be embodied in or in communication with other devices such as light fittings or light bulbs or valves or controllers for heating or cooling systems, such as thermostatic valves. For example, the other devices could have some form of processing means or circuitry that allows them to send and/or receive communications to/from the power control device, e.g. via Wi-Fi, Bluetooth or another wireless or wired channel. In this regard, the power control devices are operable to monitor energy consumed by these devices and/or allow the devices to be operated remotely, e.g. using a remote agent in the form of a network or cloud application, which could be operated using a smartphone and/or tablet computing device and/or the like when programmed with a suitable application. For example, lights or heating or cooling systems could be switched on or off and/or set to a desired opening, temperature or light level remotely, for example using the wireless or other network capabilities of the power control device. Optionally, each heating and/or cooling device (e.g. each radiator or air conditioning controller) can be controlled remotely in this manner, e.g. using thermostatic valves.

Furthermore, although in examples described above the power control device 5 has six controlled or peripheral sockets 15a-15f, one master socket 15g and one persistent socket 15h, it will be appreciated that the types and number of types of sockets/power outlets may differ.

Indeed, in an optional embodiment, the type (e.g. master, persistent or controlled or peripheral or another type) of each power outlet 15a-15h may be individually assignable and/or assignable in groups, for example using a local control on the power control device 5 and/or remotely, e.g. via an application running on a device such as a mobile device / smartphone / tablet computing device or via an internet or cloud based application or the like.

In addition, although examples are given wherein the monitored device is a computer such as a pc, mac, unix or linux based computer, it will be appreciated that the present invention could be suitably adapted for use on any suitable monitored device having the required processing and/or communications capacity such as but not limited to "smart" televisions, entertainment systems or devices, portable computing devices such as tablet computing devices, and the like.

In an optional embodiment, the power control device may be configured to communicate with or comprise a threat detection system, such as a system for detecting virus, hacking, malware or other digital threats. Examples of threat detection systems include Avast^{RTM}, Symantec^{RTM}, Dell SecureWorks^{RTM} and the like. In the event that a threat such as a virus, malware or external attempt to infiltrate a network is detected by the threat detection system, whether physically on the monitored device or via the Cloud, the firmware on the power control device 5, 5' is configured to carry out a hard break of at least selected and preferably all communications. This may comprise, for example, all the Ethernet ports being switched off, along with the powerline and wireless capabilities. This could be done by individual user or to a group via a group policy. This feature ensures that, where there is threat identified, the network is shut down until the threat level has been established and/or the offending user's computer has been cleaned.

Although, in embodiments, the user input device 60 is described in terms of a button unit, it will be appreciated that one or more user input device(s) 60 may be provided in other forms, e.g. comprised in or generated by the remote agent, for example, by providing one or more selectable buttons or icons or pop-ups or other suitable user interaction means on a display or incorporated into a component of at least one of the monitored and/or controlled devices, e.g. incorporated into a keyboard or mouse of a computer system or a remote control unit, e.g. for a television or entertainment system or the like.

## Claims

1. A power control device (5) comprising:
a communication system (30) for communicating with at least one remote agent (65) or a remote agent (65) and a remote user input device (60); wherein
the power control device (5) is configured to control power supplied to or from one or more power outlets (15a - 15h) responsive to a signal received from the remote agent (65) and/or remote user input device (60); and wherein
the at least one remote agent (65) monitors one or more monitored devices (85) and the remote agent (65) is configured to monitor usage of the one or more monitored devices (85) and send the signal to the power control device (5) when the monitored device (85) has not been used and/or not received user input for a threshold period.

2. The power control device (5) according to any preceding claim, wherein the power control device (5) comprises at least one controller for selectively controlling the power supplied to the one or more power outlets (15a - 15h).

3. The power control device (5) according to claim 2, wherein the power control device (5) comprises a plurality of operational groups, each operational group comprising at least one of the one or more power outlets (15a - 15h).

4. The power control device (5) according to any preceding claim, wherein a unique identifier is assigned or assignable to each power control unit and/or operational group and/or output power outlet (15a - 15h), wherein the unique identifier is useable to control the power outlets (15a - 15h) and/or operational groups of power outlets.

5. The power control device (5) according to either claim 3 or claim 4, wherein each operational group of power outlets (15a - 15h) is controlled by the power control device (5) differently and/or according to a different power control scheme to the other operational groups.

6. The power control device (5) according to claim 5, wherein at least one of the operational groups comprises at least one controlled or peripheral power outlet (15a - 15h) for supplying power to at least one controlled device and/or at least one of the operational groups comprises at least one master outlet (15g) for supplying power to at least one monitored device (85) and/or at least one of the operational groups comprises at least one persistent outlet (15h) for supplying power to at least one device for which power is to be supplied for a longer duration before being shut down relative to the controlled devices, wherein the at least one remote agent (65) is configured to place the at least one monitored device (85) into a first power controlled mode when the remote agent determines that the threshold period has elapsed since the last user action or input.

7. The power control device (5) according to claim 6, wherein the at least one remote agent (65) and/or power control device (5) is configured to reset a timer for determining the time since a last user action or input and/or bring the monitored device (85) out of the power control mode if a user interaction with the one or more monitored devices (85) is detected and/or responsive to operation of the user input device (60).

8. The power control device according to either claim 6 or claim 7, wherein the power control device (5) is configured to restore power to the one or more monitored devices (85) and/or controlled devices if the power controller and/or remote agent (65) determines that a user input to the monitored device (85) has taken place and/or responsive to the user input device (60) associated with, connected or connectable to or in communication with the power control device (5).

9. The power control device (5) according to any of claims 6 to 8, wherein the power control device (5) is configured to directly or indirectly place the monitored device (85) into a second power control mode and/or disconnect power to the persistent sockets (15h) if a further threshold has elapsed and no further user input to, or operation/action on, the monitored device (85) has taken place and/or the user input device (60) has not been operated since the first power controlled mode was entered.

10. The power control device (5) according to claim 9, wherein the power control device (5) and/or remote agent (65) is configured to disconnect power to the master sockets (15g) after a delay period from the further threshold and/or after a delay period from the power control device (5) / remote agent (65) signaling the monitored device (85) to enter the second power control mode and/or after a delay period from disconnection of power from the persistent sockets (15h).

11. The power control device (5) according to any preceding claim, wherein the power control device (5) comprises or is comprised in an electrical extension socket, lead or distribution device or a wall power socket or floor port; the at least one power outlet (15a - 15h) comprises an electrical socket into which electrical devices can be plugged and the power control device (5) comprises and/or is connectable to at least one power inlet (10) or connector for providing power to the power control device (5) and the power inlet (10) is connectable to each of the one or more power outlets (15a - 15h) via one or more of the controllers for selectively connecting/disconnecting the one or more power outlets (15a - 15h) to the power inlet (10).

12. The power control device (5) according to any preceding claim, wherein the user input device (60) is comprised in, connected or connectable to or pairable or communicatable with the power control device (5) and the power control device (5) is configured to selectively control power to one or more of the operational groups of power outlets (15a- 15h) and/or perform selected power control schemes or operations responsive to an associated input/signal from the user input device (60).

13. The power control device (5) according to any preceding claim, wherein the power control device (5) is accessible and/or controllable remotely via the communications system (30) and the power control device (5) is configured to provide power to selected power outlets (15a - 15h) responsive to remote access or control.

14. The power control device (5) according to any preceding claim, wherein the power control device (5) comprises surge protection and/or comprises or is connected or connectable/disconnectable to an uninterruptable power supply (UPS) battery pack.

15. The power control device (5) according to any preceding claim, wherein the power control device (5) is configured to implement a remote activation and/or deactivation or wake up on LAN function.

16. A method of controlling power to one or more controlled and/or monitored devices (85), the method comprising:
receiving a signal from at least one remote agent (65) and controlling the power supplied to one or more of the controlled and/or monitored devices (85) according to the signal received from the remote agent (65); wherein
the at least one remote agent (65) monitors one or more monitored devices (85) and the remote agent (65) is configured to monitor usage of the one or more monitored devices (85) and send the signal to the power control device (5) when the monitored device (85) has not been used and/or not received user input for a threshold period.

17. A user input device (60) configured for use with the power control device (5) according to any of claims 1 to 15.

18. A computer program product for performing the method of claim 16.

## Patentansprüche

1. Energieregelungsvorrichtung (5), aufweisend:
ein Kommunikationssystem (30) zum Kommunizieren mit mindestens einem Remote-Agent (65) oder einem Remote-Agent (65) und einer entfernten Benutzereingabevorrichtung (60); wobei
die Energieregelungsvorrichtung (5) dafür konfiguriert ist, Energie zu regeln, die an oder von eine(r) oder mehrere(n) Steckdosen (15a-15h) geliefert wird, als Reaktion auf ein Signal, das vom Remote-Agent (65) und/oder der entfernten Benutzereingabevorrichtung (60) empfangen wird; und wobei
der mindestens eine Remote-Agent (65) eine oder mehrere überwachte Vorrichtungen (85) überwacht und der Remote-Agent (65) dafür konfiguriert ist, eine Verwendung der einen oder mehreren überwachten Vorrichtungen (85) zu überwachen und das Signal an die Energieregelungsvorrichtung (5) zu senden, wenn die überwachte Vorrichtung (85) für einen Schwellenzeitraum nicht verwendet wurde und/oder keine Benutzereingabe empfangen hat.

2. Energieregelungsvorrichtung (5) nach einem der vorhergehenden Ansprüche, wobei die Energieregelungsvorrichtung (5) mindestens einen Regler zum selektiven Regeln der Energie aufweist, die an die eine oder mehreren Steckdosen (15a-15h) geliefert wird.

3. Energieregelungsvorrichtung (5) nach Anspruch 2, wobei die Energieregelungsvorrichtung (5) eine Mehrzahl von Betriebsgruppen aufweist, wobei jede Betriebsgruppe mindestens eine der einen oder mehreren Steckdosen (15a-15h) aufweist.

4. Energieregelungsvorrichtung (5) nach einem der vorhergehenden Ansprüche, wobei jeder Energieregelungseinheit und/oder Betriebsgruppe und/oder Ausgangssteckdose (15a-15h) ein eindeutiger Identifikator zugewiesen wird oder zuweisbar ist, wobei der eindeutige Identifikator zum Regeln der Steckdosen (15a-15h) und/oder Betriebsgruppen von Steckdosen verwendbar ist.

5. Energieregelungsvorrichtung (5) nach Anspruch 3 oder Anspruch 4, wobei jede Betriebsgruppe von Steckdosen (15a-15h) von der Energieregelungsvorrichtung (5) unterschiedlich und/oder gemäß einem von den anderen Betriebsgruppen unterschiedlichen Energieregelungsplan geregelt wird.

6. Energieregelungsvorrichtung (5) nach Anspruch 5, wobei mindestens eine der Betriebsgruppen mindestens eine geregelte oder periphere Steckdose (15a-15h) zum Liefern von Energie an mindestens eine geregelte Vorrichtung aufweist, und/oder mindestens eine der Betriebsgruppen mindestens eine Hauptsteckdose (15g) zum Liefern von Energie an mindestens eine überwachte Vorrichtung (85) aufweist, und/oder mindestens eine der Betriebsgruppen mindestens eine Dauersteckdose (15h) zum Liefern von Energie an mindestens eine Vorrichtung aufweist, an die Energie für einen längeren Zeitraum vor dem Abschalten in Bezug auf die geregelten Vorrichtungen geliefert werden soll, wobei der mindestens eine Remote-Agent (65) dafür konfiguriert ist, die mindestens eine überwachte Vorrichtung (85) in einen ersten Energieregelungsmodus zu versetzen, wenn der Remote-Agent bestimmt, dass der Schwellenzeitraum seit der letzten Benutzeraktion oder -eingabe abgelaufen ist.

7. Energieregelungsvorrichtung (5) nach Anspruch 6, wobei der mindestens eine Remote-Agent (65) und/oder die Energieregelungsvorrichtung (5) dafür konfiguriert sind, einen Zeitnehmer zum Bestimmen der Zeit seit einer letzten Benutzeraktion oder -eingabe zurückzusetzen und/oder die überwachte Vorrichtung (85) aus dem Energieregelungsmodus zu holen, wenn eine Benutzerinteraktion mit der einen oder den mehreren überwachten Vorrichtungen (85) erkannt wird, und/oder als Reaktion auf eine Bedienung der Benutzereingabevorrichtung (60).

8. Energieregelungsvorrichtung nach Anspruch 6 oder Anspruch 7, wobei die Energieregelungsvorrichtung (5) dafür konfiguriert ist, eine Energie an die eine oder mehreren überwachten Vorrichtungen (85) und/oder geregelten Vorrichtungen wiederherzustellen, wenn der Energieregler und/oder der Remote-Agent (65) bestimmen, dass eine Benutzereingabe an der überwachten Vorrichtung (85) stattgefunden hat, und/oder als Reaktion auf die Benutzereingabevorrichtung (60), die mit der Energieregelungsvorrichtung (5) assoziiert, verbunden oder verbindbar oder in Kommunikation ist.

9. Energieregelungsvorrichtung (5) nach einem der Ansprüche 6 bis 8, wobei die Energieregelungsvorrichtung (5) dafür konfiguriert ist, die überwachte Vorrichtung (85) direkt oder indirekt in einen zweiten Energieregelungsmodus zu versetzen und/oder eine Energie an die Dauersteckdosen (15h) zu trennen, wenn eine weitere Schwelle überschritten wurde und keine weitere Benutzereingabe oder kein Betrieb/keine Aktion an der überwachten Vorrichtung (85) stattgefunden hat und/oder die Benutzereingabevorrichtung (60) seit dem Eintreten in den ersten Energieregelungsmodus nicht bedient wurde.

10. Energieregelungsvorrichtung (5) nach Anspruch 9, wobei die Energieregelungsvorrichtung (5) und/oder der Remote-Agent (65) dafür konfiguriert sind, eine Energie an die Hauptsteckdosen (15g) zu trennen, nach einer Verzögerungsperiode ab der weiteren Schwelle und/oder nach einer Verzögerungsperiode, nachdem die Energieregelungsvorrichtung (5)/der Remote-Agent (65) der überwachten Vorrichtung (85) signalisiert hat, in den zweiten Energieregelungsmodus einzutreten, und/oder nach einer Verzögerungsperiode ab der Trennung der Energie von den Dauersteckdosen (15h).

11. Energieregelungsvorrichtung (5) nach einem der vorhergehenden Ansprüche, wobei die Energieregelungsvorrichtung (5) eine elektrische Erweiterungsbuchse, ein Kabel oder eine Verteilungsvorrichtung oder eine Wandsteckdose oder einen Bodenanschluss aufweist oder darin enthalten ist; die mindestens eine Steckdose (15a-15h) weist eine elektrische Buchse auf, an der elektrische Vorrichtungen angesteckt werden können, und die Energieregelungsvorrichtung (5) weist mindestens einen Energieeingang (10) oder Verbindungsstecker zum Bereitstellen von Energie an die Energieregelungsvorrichtung (5) auf und/oder ist damit verbindbar, und der Energieeingang (10) ist über eine oder mehrere der Regler mit jeder der einen oder mehreren Steckdosen (15a-15h) verbindbar, um die eine oder mehreren Steckdosen (15a-15h) selektiv mit dem/vom Energieeingang (10) zu verbinden/trennen.

12. Energieregelungsvorrichtung (5) nach einem der vorhergehenden Ansprüche, wobei die Benutzereingabevorrichtung (60) in/mit der Energieregelungsvorrichtung (5) enthalten, verbunden oder verbindbar ist oder daran gekoppelt oder damit in Kommunikation gesetzt werden kann, und die Energieregelungsvorrichtung (5) dafür konfiguriert ist, selektiv eine Energie an eine oder mehrere der Betriebsgruppen von Steckdosen (15a-15h) zu regeln und/oder ausgewählte Energieregelungspläne oder -vorgänge auszuführen, als Reaktion auf ein(e) assoziierte(s) Eingabe/Signal von der Benutzereingabevorrichtung (60).

13. Energieregelungsvorrichtung (5) nach einem der vorhergehenden Ansprüche, wobei die Energieregelungsvorrichtung (5) über das Kommunikationssystem (30) von einem entfernten Ort ansprechbar und/oder steuerbar ist, und die Energieregelungsvorrichtung (5) dafür konfiguriert ist, als Reaktion auf Fernzugriff und/oder -steuerung Energie für ausgewählte Steckdosen (15a-15h) bereitzustellen.

14. Energieregelungsvorrichtung (5) nach einem der vorhergehenden Ansprüche, wobei die Energieregelungsvorrichtung (5) einen Überspannungsschutz aufweist und/oder ein Batteriepaket für eine unterbrechungsfreie Stromversorgung (USV) aufweist oder damit verbunden ist oder damit verbindbar/davon trennbar ist.

15. Energieregelungsvorrichtung (5) nach einem der vorhergehenden Ansprüche, wobei die Energieregelungsvorrichtung (5) dafür konfiguriert ist, eine Fernaktivierung und/oder -deaktivierung oder eine Einschaltfunktion über ein LAN (Wake up on LAN) zu implementieren.

16. Verfahren zum Regeln von Energie an eine oder mehrere geregelte und/oder überwachte Vorrichtungen (85), wobei das Verfahren aufweist:
Empfangen eines Signals von mindestens einem Remote-Agent (65) und Regeln der Energie, die an eine oder mehrere der geregelten und/oder überwachten Vorrichtungen (85) geliefert wird, gemäß dem von dem Remote-Agent (65) empfangenen Signal; wobei
der mindestens eine Remote-Agent (65) eine oder mehrere überwachte Vorrichtungen (85) überwacht und der Remote-Agent (65) dafür konfiguriert ist, eine Verwendung der einen oder mehreren überwachten Vorrichtungen (85) zu überwachen und das Signal an die Energieregelungsvorrichtung (5) zu senden, wenn die überwachte Vorrichtung (85) für einen Schwellenzeitraum nicht verwendet wurde und/oder keine Benutzereingabe empfangen hat.

17. Benutzereingabevorrichtung (60), konfiguriert zur Verwendung mit der Energieregelungsvorrichtung (5) nach einem der Ansprüche 1 bis 15.

18. Computerprogrammprodukt zum Durchführen des Verfahrens nach Anspruch 16.

## Revendications

1. Dispositif de régulation de puissance (5) comprenant :
un système de communication (30) pour communiquer avec au moins un agent à distance (65) ou un agent à distance (65) et un dispositif d'entrée d'utilisateur à distance (60) ;
dans lequel :
le dispositif de régulation de puissance (5) est configuré pour réguler une puissance délivrée à ou à partir d'une ou plusieurs prises électriques (15a - 15h) en réponse à un signal reçu depuis l'agent à distance (65) et/ou un dispositif d'entrée d'utilisateur à distance (60) ; et dans lequel
le au moins un agent à distance (65) surveille un ou plusieurs dispositifs surveillés (85) et l'agent à distance (65) est configuré pour surveiller l'utilisation du ou des dispositifs surveillés (85) et envoyer le signal au dispositif de régulation de puissance (5) lorsque le dispositif surveillé (85) n'a pas été utilisé et/ou n'a pas reçu d'entrée d'utilisateur pendant une période seuil.

2. Dispositif de régulation de puissance (5) selon une quelconque revendication précédente, dans lequel le dispositif de régulation de puissance (5) comprend au moins une unité de régulation pour réguler de manière sélective la puissance délivrée à la ou aux prises électriques (15a - 15h).

3. Dispositif de régulation de puissance (5) selon la revendication 2, dans lequel le dispositif de régulation de puissance (5) comprend une pluralité de groupes opérationnels, chaque groupe opérationnel comprenant au moins l'une parmi la ou les prises électriques (15a - 15h).

4. Dispositif de régulation de puissance (5) selon une quelconque revendication précédente, dans lequel un identifiant unique est attribué ou apte à être attribué à chaque unité de régulation de puissance et/ou groupe opérationnel et/ou prise électrique de sortie (15a - 15h), l'identifiant unique étant apte à être utilisé pour réguler les prises électriques (15a - 15h) et/ou les groupes opérationnels de prises électriques.

5. Dispositif de régulation de puissance (5) selon la revendication 3 ou la revendication 4, dans lequel chaque groupe opérationnel de prises électriques (15a - 15h) est régulé par le dispositif de régulation de puissance (5) différemment et/ou en fonction d'un mode de régulation de puissance différent par rapport aux autres groupes opérationnels.

6. Dispositif de régulation de puissance (5) selon la revendication 5, dans lequel au moins l'un des groupes opérationnels comprend au moins une prise électrique commandée ou périphérique (15a - 15h) pour délivrer une puissance à au moins un dispositif commandé et/ou au moins l'un des groupes opérationnels comprend au moins une prise maître (15g) pour délivrer une puissance à au moins un dispositif surveillé (85) et/ou au moins l'un des groupes opérationnels comprend au moins une prise permanente (15h) pour délivrer une puissance à au moins un dispositif pour lequel une puissance doit être délivrée pendant une durée plus longue avant d'être coupée par rapport aux dispositifs commandés, le au moins un agent à distance (65) étant configuré pour placer le au moins un dispositif surveillé (85) dans un premier mode régulé en puissance lorsque l'agent à distance détermine que la période seuil s'est écoulée depuis la dernière action ou entrée d'utilisateur.

7. Dispositif de régulation de puissance (5) selon la revendication 6, dans lequel le au moins un agent à distance (65) et/ou le dispositif de régulation de puissance (5) est configuré pour réinitialiser un registre d'horloge pour déterminer le temps depuis une dernière action ou entrée d'utilisateur et/ou amener le dispositif surveillé (85) hors du mode de régulation de puissance si une interaction d'utilisateur avec le ou les dispositifs surveillés (85) est détectée et/ou en réponse à une opération du dispositif d'entrée d'utilisateur (60).

8. Dispositif de régulation de puissance selon la revendication 6 ou la revendication 7, dans lequel le dispositif de régulation de puissance (5) est configuré pour restaurer la puissance au ou aux dispositifs surveillés (85) et/ou dispositifs commandés si le dispositif de régulation de puissance et/ou l'agent à distance (65) détermine qu'une entrée d'utilisateur sur le dispositif surveillé (85) a eu lieu et/ou en réponse au dispositif d'entrée d'utilisateur (60) associé avec, connecté ou apte à être connecté à ou en communication avec le dispositif de régulation de puissance (5).

9. Dispositif de régulation de puissance (5) selon l'une quelconque des revendications 6 à 8, dans lequel le dispositif de régulation de puissance (5) est configuré pour placer directement ou indirectement le dispositif surveillé (85) dans un second mode de régulation de puissance et/ou couper la puissance vers les prises permanentes (15h) si un autre seuil s'est écoulé et qu'aucune autre entrée d'utilisateur sur, ou opération/action sur, le dispositif surveillé (85) n'a eu lieu et/ou le dispositif d'entrée d'utilisateur (60) n'a pas été actionné depuis que l'entrée dans le premier mode régulé en puissance.

10. Dispositif de régulation de puissance (5) selon la revendication 9, dans lequel le dispositif de régulation de puissance (5) et/ou l'agent à distance (65) est configuré pour couper une puissance vers les prises maîtres (15g) après une période de retard à partir de l'autre seuil et/ou après une période de retard à partir du moment où le dispositif de régulation de puissance (5)/l'agent à distance (65) a signalé au dispositif surveillé (85) d'entrer dans le second mode de régulation de puissance et/ou après une période de retard à partir de la coupure de puissance vis-à-vis des prises permanentes (15h).

11. Dispositif de régulation de puissance (5) selon une quelconque revendication précédente, dans lequel le dispositif de régulation de puissance (5) comprend ou est compris dans une prise d'extension électrique, conducteur ou dispositif de distribution ou une prise électrique murale ou accès au sol ; la au moins une prise électrique (15a - 15h) comprend une prise de courant dans laquelle des dispositifs électriques peuvent être enfichés et le dispositif de régulation de puissance (5) comprend et/ou est apte à être connecté à au moins une entrée de puissance (10) ou connecteur pour délivrer une puissance au dispositif de régulation de puissance (5) et l'entrée de puissance (10) est apte à être connectée à chacune de la ou des prises électriques (15a - 15h) par l'intermédiaire d'une ou plusieurs des unités de régulation pour connecter/déconnecter de manière sélective la ou les prises électriques (15a - 15h) vis-à-vis de l'entrée de puissance (10).

12. Dispositif de régulation de puissance (5) selon une quelconque revendication précédente, dans lequel le dispositif d'entrée d'utilisateur (60) est compris dans, est connecté ou apte à être connecté à ou apte être apparié ou apte à être en communication avec le dispositif de régulation de puissance (5) et le dispositif de régulation de puissance (5) est configuré pour réguler de manière sélective une puissance vers le ou les groupes opérationnels de prises électriques (15a - 15h) et/ou à réaliser des modes ou opérations de régulation de puissance sélectionnés en réponse à une entrée/signal associé provenant du dispositif d'entrée d'utilisateur (60).

13. Dispositif de régulation de puissance (5) selon une quelconque revendication précédente, dans lequel le dispositif de régulation de puissance (5) est accessible et/ou apte à être commandé à distance par l'intermédiaire du système de communication (30) et le dispositif de régulation de puissance (5) est configuré pour fournir une puissance à des prises électriques sélectionnées (15a - 15h) en réponse à un accès ou commande à distance.

14. Dispositif de régulation de puissance (5) selon une quelconque revendication précédente, dans lequel le dispositif de régulation de puissance (5) comprend une protection contre une surtension et/ou comprend ou est connecté ou apte à être connecté/déconnecté à un bloc-batterie à alimentation sans coupure (UPS).

15. Dispositif de régulation de puissance (5) selon une quelconque revendication précédente, dans lequel le dispositif de régulation de puissance (5) est configuré pour mettre en oeuvre une activation et/ou désactivation à distance ou une mise en marche sur une fonction LAN.

16. Procédé de régulation de puissance vers un ou plusieurs dispositifs commandés et/ou surveillés (85), le procédé comprenant :
recevoir un signal à partir d'au moins un agent à distance (65) et réguler la puissance délivrée au ou aux dispositifs commandés et/ou surveillés (85) en fonction du signal reçu à partir de l'agent à distance (65) ; dans lequel :
le au moins un agent à distance (65) surveille un ou plusieurs dispositifs surveillés (85) et l'agent à distance (65) est configuré pour surveiller l'utilisation du ou des dispositifs surveillés (85) et envoyer le signal au dispositif de régulation de puissance (5) lorsque le dispositif surveillé (85) n'a pas été utilisé et/ou n'a pas reçu d'entrée d'utilisateur pendant une période seuil.

17. Dispositif d'entrée d'utilisateur (60) configuré pour être utilisé avec le dispositif de régulation de puissance (5) selon l'une quelconque des revendications 1 à 15.

18. Produit programme d'ordinateur pour la mise en oeuvre du procédé selon la revendication 16.
